# EUROPÄISCHE PATENTSCHRIFT

(11) **EP 2 558 294 B1**
(45) Veröffentlichungstag und Bekanntmachung des Hinweises auf die Patenterteilung: **27.12.2017**
(21) Anmeldenummer: 11710181.6
(22) Anmeldetag: 22.03.2011
(51) Int. Cl.: B32B 27/32, B32B 25/14, A61J 1/10

(54) **MEHRSCHICHTFOLIE, VERWENDUNG EINER MEHRSCHICHTFOLIE UND VERFAHREN ZUR HERSTELLUNG EINER MEHRSCHICHTFOLIE**
MULTILAYER FILM, USE OF A MULTILAYER FILM AND PROCESS FOR PREPARATION OF A MULTILAYER FILM
FILM MULTICOUCHE, UTILISATION D'UN FILM MULTICOUCHE ET PROCEDE POUR PREPARTION D'UN FILM MULTICOUCHE

(30) Priorität: 13.04.2010 DE 102010014785
(43) Veröffentlichungstag der Anmeldung: 20.02.2013
(73) Patentinhaber: Fresenius Medical Care Deutschland GmbH, 61352 Bad Homburg (DE)
(72) Erfinder: KREISCHER, Thomas, 66113 Saarbrücken (DE); HÖRMANN, Jörn, 66265 Heusweiler (DE); KUGELMANN, Franz, 66606 St. Wendel / Bliesen (DE)
(74) Vertreter: Stolmár & Partner Patentanwälte PartG mbB
(86) Internationale Anmeldenummer: PCT/EP2011/054313
(87) Internationale Veröffentlichungsnummer: WO 2011/128185

(56) Entgegenhaltungen:
- WO-A1-95/26177
- WO-A2-2009/082132
- US-A1- 2009 299 260

## Beschreibung

Die vorliegende Erfindung betrifft einen Beutel für medizinische Zwecke, umfassend eine Mehrschichtfolie, eine Verwendung der Mehrschichtfolie zur Herstellung von Beuteln zur Aufnahme von Blut oder Blutkomponenten oder medizinischen Lösungen, eine Verwendung der Mehrschichtfolie in medizinischen Pumpen und ein
Verfahren zur Herstellung eines Beutels, umfassend eine Mehrschichtfolie. Ferner betrifft die Erfindung die Verwendung der Mehrschichtfolie zur Herstellung eines Mehrkammerbeutels zur Verwendung in der Hämodialyse oder Peritonealdialyse bzw. einer Hämodialyse- oder Peritonealdialysevorrichtung, insbesondere als Behälter für eine Dialysierflüssigkeit in einer Hämodialyse- oder Peritonealdialysevorrichtung.

Hämodialyse- oder Peritonealdialysegeräte sind in verschiedenen Ausführungen bekannt. Der Stoffaustausch in der Hämodialyse und anderen extrakorporalen Blutbehandlungstherapien zwischen dem Blut und der Dialysierflüssigkeit findet an einem Dialysator statt, der einen ersten Strömungsweg für das Blut und einen zweiten Strömungsweg für die Dialysierflüssigkeit aufweist, wobei beide Strömungswege in der Regel durch eine semipermeable Membran voneinander getrennt sind. Der erste Strömungsweg ist Bestandteil eines extrakorporalen Blutkreislaufs mit einer Zuführleitung und einer Rückführleitung für das Blut sowie gegebenenfalls einer den Blutfluss unterstützenden Pumpe. Der zweite Strömungsweg ist mit Einrichtungen zum Zuführen und Abführen der Dialysierflüssigkeit verbunden.

Neben den sogenannten Single-Path-Systemen, bei denen die kontinuierlich zugeführte Dialysierflüssigkeit nur einmal den Dialysator passiert und dann verworfen wird, sind sogenannte Batch-Systeme bekannt. Die DE 31 15 665 C2 beschreibt ein derartiges Hämodialysegerät, das mit einem gegen die Atmosphäre abgeschlossenen volumenstarren Behälter arbeitet, der vor Beginn der Behandlung vollständig mit frischer Dialysierflüssigkeit gefüllt wird. Während des Betriebs wird die Flüssigkeit aus dem Behälter durch den Dialysator gepumpt und die verbrauchte Flüssigkeit wird wieder in den Behälter zurückgeleitet.

Eine Vermischung von frischer und verbrauchter Dialysierflüssigkeit wird bei dem bekannten Hämodialysegerät dadurch vermieden, dass die Entnahme der Dialysierflüssigkeit im oberen Bereich des Behälters erfolgt, während die Rückführung im unteren Behälterbereich stattfindet. Die Unterschichtung der frischen Dialysierflüssigkeit mit der verbrauchten Dialysierflüssigkeit bleibt durch die Aufrechterhaltung eines vertikalen Temperaturgefälles in dem Behälter von oben nach unten stabil.

Der Behälter besteht aus Glas, das im Vergleich zu anderen Werkstoffen wegen der porenfreien Oberfläche hygienisch und bakteriologisch günstige Eigenschaften hat. Darüber hinaus ist Glas weitgehend resistent gegen in Betracht kommende Chemikalien, gut zu reinigen und physiologisch unbedenklich. Die Handhabung eines solchen immer wieder verwendbaren Glasbehälters erweist sich jedoch durch die vor der erneuten Dialysebehandlung erforderliche Desinfektion des Glasbehälters als aufwändig.

Die US 4,767,526 beschreibt ebenfalls ein Dialysegerät, bei dem die Dialysierflüssigkeit in einem Behälter bereitgestellt wird. Um eine Desinfizierung zu vermeiden, wird vorgeschlagen, den Behälter mit einem flexiblen Beutel auszukleiden, der nach dem Gebrauch verworfen wird.

Als Behälter zur Aufnahme von medizinischen Flüssigkeiten sind flexible Kunststoffbeutel bekannt, die aus zwei flach übereinanderliegenden und an ihren Rändern miteinander verschweißten Folien bestehen.

Die DE 19825158 C1 beschreibt ebenso einen Einwegbeutel für eine Hämodialysevorrichtung oder eine Vorrichtung zur Peritonealdialyse, der vorzugsweise ein Konzentrat zur Herstellung von Dialysierflüssigkeit aufweist. Dieser Beutel kann aus einer Kammer bestehen, in der im Laufe des Dialyseverfahrens die verbrauchte Flüssigkeit unter die frische Dialysierflüssigkeit geschichtet wird. Alternativ dazu kann der Einwegbeutel auch eine Folie enthalten, die den Beutel in zwei Kammern trennt, wobei in der einen Kammer des Beutels die frische Dialysierflüssigkeit vorliegt und in die andere Kammer während des Dialyseverfahrens die verbrauchte Flüssigkeit geführt wird.

Bei den oben genannten Behältern aus Glas ist es ungünstig, dass eine schnelle Wiederverwendung durch den aufwendigen Desinfizierungsschritt nicht stattfinden kann. Einwegbeutel, die diesen Desinfizierungsschritt überflüssig machen, lösen jedoch bis heute nicht das Problem, dass bei einem vorgelegten und in Wasser aufzulösendem Granulat während der Lagerung des Beutels inklusive Granulat die verschiedenen Bestandteile des Granulats miteinander reagieren, so dass eine Lagerstabilität über einen gewissen Zeitraum nicht gegeben ist. Zudem weisen Dialysierflüssigkeiten, die durch Auflösen eines Granulats, das alle notwendigen Bestandteile beinhaltet, hergestellt werden, oft das Problem auf, dass durch unerwünschte Reaktion verschiedener Bestandteile nicht das gesamte Granulat in Lösung geht. Weiterhin ist es wichtig während des Einfüllens von Lösungsmittel in den Beutel mit Granulat, den pH Wert entsprechend zu kontrollieren, so dass unerwünschte Ausfällungen während des Auflösens des Granulats in der Flüssigkeit vermieden werden. Treten die genannten Probleme auf, eignet sich die Dialysierflüssigkeit nicht für die Hämodialyse oder Peritonealdialyse und muss samt Beutel verworfen werden.

Neben Glukose und physiologisch essentiellen Salzen, bzw. Ionen, sollten Dialysierflüssigkeiten günstigenfalls einen pH-Wert im physiologischen Bereich aufweisen (pH zwischen 6,5 und 7,6). Vorzugsweise sollte als therapeutisch notwendige Pufferkomponente im Dialysat Bikarbonat verwendet werden. Um diesen beim Auflösen naturgemäß basisch reagierenden Puffer auf einen physiologischen Wert einzustellen, wird eine Säurekomponente benötigt. Im Regelfall wird daher bei bikarbonathaltigen Dialyselösungen zunächst eine Säurekomponente und eine bikarbonathaltige Komponente vorgelegt. Beim Durchmischen der wässrigen Teile dieser Komponenten entsteht die gebrauchsfertige, im physiologischen Bereich gepufferte Dialyselösung. Die basische und die saure Komponente müssen in zusammen durchmischter Form physiologisch verträglich sein. Als physiologisch essentielle Ionenkann die Lösung neben Natrium- und Kalium- auch Calcium- und Magnesiumionen enthalten. In der Batchdialyse wird das für eine Behandlungseinheit benötigte Volumen an Dialysierflüssigkeit vollständig vorgelegt. In anderen Verfahren wird das Dialysat online an der Dialysemaschine hergestellt. Eine Dialysierflüssigkeit wird meist aus einem einzigen Konzentrat hergestellt, das im Falle der DE 198 25 158 im Einwegbeutel vorgelegt wird. Werden solche Konzentrate, die leicht lösliche Calcium- bzw. Magnesium-Salze und als basische Pufferkomponente ein (Bi)-Carbonatsalz enthalten, über längere Zeit gelagert, so tritt zumindest unter luftfeuchten Bedingungen das Problem auf, dass die Komponenten miteinander reagieren und sich somit schwerlösliches Calcium- bzw. Magnesiumcarbonat bilden kann. Ebenso fällt schwer lösliches Calcium- bzw. Magnesiumcarbonat aus einer Lösung aus, deren pH nicht im idealen Bereich von vorzugsweise < pH 8 eingestellt ist. Deshalb ist es ungünstig, ein Konzentrat mit allen nötigen physiologisch essentiellen Komponenten in einem Beutel gemeinsam vorzulegen, da solche Systeme wegen den oben genannten Problemen nicht lange gelagert werden können, und da bei dem Auflösen in einer Flüssigkeit bereichsweise in der Lösung ein pH von über 8 vorliegt, sodass es zu unerwünschten Ausfällungen kommt.

Gemäß der Deutschen Patentanmeldung mit der Anmeldenummer DE 102009058445 werden daher für medizinische Zwecke Mehrkammerbeutel eingesetzt, die es ermöglichen, ein Konzentrat in/mit einer Flüssigkeit zu lösen oder zu mischen, durch Durchbrechen einer Trenneinrichtung zwischen Kammern des Mehrkammerbeutels und Lösen und/oder Mischen des Konzentrats in oder mit der Flüssigkeit. Beinhaltet der Mehrkammerbeutel insgesamt mindestens zwei Kammern, so können in diesen Konzentrate gleicher oder verschiedener Zusammensetzung vorliegen. Durch das Durchbrechen der Trenneinrichtung zwischen den Kammern des Beutels entsteht eine resultierende Kammer, deren Volumen die Summe der Volumina der Kammern des Mehrkammerbeutels umfasst. Auf diese Weise können verschiedene Stoffe und/oder Flüssigkeiten aus verschiedenen Kammern erst beim Zubereiten nach dem Durchbrechen der Trenneinrichtung miteinander in Berührung kommen.

Als Mehrkammerbeutel eignet sich ein Folienbeutel, der aus einer flexiblen Folie aus Kunststoff besteht. Der Folienbeutel ist beispielsweise aus einer ein- oder mehrlagigen Kunststofffolie gebildet, wobei die innerste Folienlage eine verschweißbare Folienlage ist. Die Trenneinrichtung zwischen den Kammern des Beutels wird beispielsweise durch Verschweißen zweier im Beutel gegenüberliegender innerer Folienlagen zu einer Reißnaht gebildet. Demgemäß versteht man in diesem Zusammenhang unter einer Reißnaht eine z.B. lineare Verschweißung zweier gegenüberliegender innerer Seiten des Beutels. Die Reißnaht verläuft in dem Beutel beispielsweise so, dass die Kammern getrennt voneinander vorliegen, d.h. die Innenräume der Kammern stehen nicht in Verbindung. Beispielsweise durch Einbringen einer Flüssigkeit wird jedoch die Reißnaht durchbrochen, so dass die zuvor getrennten Räume in Verbindung stehen.

Beispielsweise sind die Reißnähte des Beutels sogenannte Peelnähte. Diese werden zum Beispiel unter Wärmebehandlung und Verbinden zweier gegenüberliegender Folienabschnitte hergestellt. Peelnähte weisen den Vorteil auf, dass sie im Allgemeinen ohne Folienbruch lösbar sind.

Die genannten Beutel sind vorzugsweise Folienbeutel. Beispielsweise werden die Beutel aus einer Folie gefertigt, die aus einem Stück besteht. In anderen Worten ist die die äußere Dimension des Beutels begrenzende Folie aus einem Folienstück. Der ist vorzugsweise in seinem Inneren steril. Den durch ein Verfahren, durch welches die Materialien und Gegenstände von lebenden Mikroorganismen befreit werden, erreichten Zustand der Materialien und Gegenstände bezeichnet man als steril. In der Praxis gelingt jedoch eine vollständige Sterilisation nicht mit hundertprozentiger Sicherheit. Es wird deshalb unter "Sterilisation" oder dem Begriff "steril" eine Reduktion der Anzahl an vermehrungsfähigen Mikroorganismen um einen je nach Anwendungsbereich bestimmten Faktor verstanden. Unter Anderem versteht man darunter, dass der Restgehalt an vermehrungsfähigen Mikroorganismen in einer Einheit des Sterilisiergutes höchstens 10⁻⁶ koloniebildende Einheiten beträgt, d.h. dass in einer Million gleich behandelter Einheiten des Sterilisiergutes maximal ein vermehrungsfähiger Mikroorganismus enthalten sein darf. Die Sterilisation kann durch physikalische (thermisch, bestrahlt) oder chemische Verfahren durchgeführt werden.

Ein Beispiel eines geeigneten Beutels besteht aus einer ein- oder mehrlagigen Folie. Die innerste Lage der ein- oder mehrlagigen Folie ist eine verschweißbare Folienlage. Eine besonders erwünschte Trenneinrichtung ist, wie oben erwähnt, eine Reißnaht, die durch Verschweißen zweier gegenüberliegender innerster Folienlagen gebildet ist und so eine Peelnaht bildet. Beispielweise wird die Trenneinrichtung dadurch gebildet, dass in dem Beutel eine Kammer eine Zulauföffnung für eine Flüssigkeit enthält. Durch das Einbringen der Flüssigkeit wirkt ein Druck auf die Wand der Kammer, die eine Reiß- oder Peelnaht aufweist, die wie oben definiert ist. Durch diesen Druck wird die Reiß- oder Peelnaht durchbrochen, so dass der Inhalt der Kammer in eine andere Kammer gelangt, und alle gelösten oder angelösten Konzentrate aus den Kammern vermischt werden.

Wird einer der oben genannten Beutel in der Hämodialyse bzw. Peritonealdialyse eingesetzt, so stellt die nach dem Durchbrechen der Trenneinrichtungen resultierende Kammer, die als Volumen im Wesentlichen die Summe der Volumina der gesamten Kammern umfasst, beispielsweise einen Raum zur Aufbewahrung von frischer Dialysierflüssigkeit dar. Der so gestaltete Beutel kann in der Hämodialyse oder Peritonealdialyse, insbesondere als Behälter zum Aufbewahren von Dialysierflüssigkeit in einer Hämo- oder Peritonealdialysevorrichtung, verwendet werden.

Ein derartiger Beutel sollte in der Lage sein, große Volumina an Flüssigkeiten aufzunehmen und ausreichend elastisch dehnbar zu sein. Daher wird eine Folie benötigt, die für die Herstellung großvolumiger, dehnbarer Beutel geeignet ist. Folien, insbesondere elastische dehnbare Folien, die zur Verwendung für Beutel in der Medizintechnik geeignet sind, sollten eine Reihe von erwünschten Anforderungen erfüllen. Erwünschte Eigenschaften einer derartigen Folie sind beispielsweise: eine Eignung des Folienmaterials als medizinische Folie; eine hohe Flexibilität, damit ein daraus hergestellter Beutel großvolumige Füllmengen z.B. bis ca. 70 l aufnehmen kann; eine hohe Dehnbarkeit, um einen expansionsfähigen Beutel herstellen zu können; ein elastisches Dehnverhalten mit geringer Neigung zur plastischen Verformung; eine plastische Verformbarkeit, um zur Formung von Taschen ausreichend tiefziehfähig zu sein; eine Hitzesterilisierbarkeit bei z.B. Temperaturen von ca. 121°C; eine mechanische Stabilität; eine geringe Verblockungsneigung, d.h. Adhäsionsneigung, damit einander gegenüberliegende Innenseiten eines Beutels nicht aneinander haften bleiben; und ein gutes Schweißverhalten zur Ausbildung von Peel- und Permanentschweißnähten. Ferner ist es für einige Anwendungen erwünscht, dass die Folie frei von Polyethylen und/oder Polyethylen-Copolymeren ist. Die Verwendung von Polyethylen- und/oder Polyethylen-Copolymer-Verpackungen kann insofern problematisch sein, als die Rezepturen, die für den regulatorischen Zulassungsprozess notwendig sind, von den Herstellern oft nicht offengelegt werden.

Diese Anforderungen bedingen sich oft gegenseitig und wirken zudem oft gegenläufig, so dass es nach wie vor einen Bedarf für eine Folie mit optimalen Eigenschaften gibt.

Aufgabe ist es, eine verbesserte Folie bereitzustellen, insbesondere eine Folie, die sich für die Herstellung großvolumiger, dehnbarer Beutel eignet.

In einer Ausführungsform wird daher ein Beutel für medizinische Zwecke, umfassend eine Mehrschichtfolie, bereitgestellt, mit einer oder zwei Außenschichten, wobei die Außenschichten enthalten: ein erstes Polyalphaolefin; ein erstes thermoplastisches Elastomer mit einer Schmelzviskosität eines Schmelzflußindexes nach ISO 1133 von 0,001 bis 6 g/10 min bei 230°C, 2,16 kg; und ein zweites thermoplastisches Elastomer mit einer nach ISO 1133 nicht messbar hohen Schmelzviskosität, die höher ist als die Schmelzviskosität des ersten thermoplastischen Elastomers.

Eine andere Ausführungsform betrifft eine Verwendung der Mehrschichtfolie zur Herstellung von Beuteln zur Aufnahme von Blut oder Blutkomponenten oder medizinischen Lösungen, wobei die Dicke der weiteren Schicht der Mehrschichtfolie in einem Bereich von 100 bis 500 µm liegt.

In einer weiteren Ausführungsform wird der Beutel, umfassend die Mehrschichtfolie in medizinischen Pumpen verwendet, wobei die Dicke der weiteren Schicht der Mehrschichtfolie in einem Bereich von 50 bis 150 µm liegt.

Gemäß einer Ausführungsform wird eine Verwendung der Mehrschichtfolie bereitgestellt zur Herstellung eines Mehrkammerbeutels zur Verwendung in der Hämodialyse oder Peritonealdialyse oder einer Hämodialyse- oder Peritonealdialysevorrichtung, insbesondere als Behälter für eine Dialysierflüssigkeit in einer Hämodialyse- oder Peritonealdialysevorrichtung.

In einer weiteren Ausführungsform wird Verfahren zur Herstellung des Beutels, umfassend eine Mehrschichtfolie bereitgestellt, wobei die Mehrschichtfolie durch Coextrusion hergestellt wird.

Weitere Merkmale und Zweckmäßigkeiten ergeben sich aus der folgenden Beschreibung von Ausführungsformen, den Figuren und den Unteransprüchen.

Alle hier beschriebenen und sich nicht gegenseitig ausschließenden Merkmale von Ausführungsformen können miteinander kombiniert werden. Gleiche Elemente der Ausführungsformen sind in der folgenden Beschreibung mit den gleichen Bezugszeichen versehen. Elemente einer Ausführungsform können in den anderen Ausführungsformen genutzt werden ohne weitere Erwähnung.

Hier verwendete Abkürzungen von Material-Komponenten und ihre Bedeutungen sind: PP Polypropylen; PE Polyethylen; PP-R Polypropylen-Random-Copolymer; SIS Styrol-Isopren-Styrol-Copolymer; SEBS Styrol-Ethylen-Butylen-Styrol-Copolymer; SEBS Styrol-Ethylen-Butylen-Styrol-Copolymer; SEPS Styrol-Ethylen-Propylen-Styrol-Copolymer; SEEPS Styrol-Ethylen-Ethylen-Propylen-Styrol-Copolymer; PE-Copolymer Polyethylen-Copolymer.

Unter dem Begriff "Mehrschichtfolie", im Folgenden auch Folie genannt, wird in der vorliegenden Erfindung eine Folie verstanden, die aus zwei oder mehr Schichten verschiedenen oder gleichen Materials besteht, die adhäsiv miteinander verbunden sein können. Dabei ist es im Rahmen der vorliegenden Erfindung bevorzugt, dass die Mehrschichtfolie aus 2 bis 10 Schichten aufgebaut ist, wobei ein Aufbau aus 3 bis 7 Schichten bevorzugter und ein Aufbau aus 3 bis 5 Schichten besonders bevorzugt ist. Die Mehrschichtfolie kann gemäß jedem Verfahren hergestellt werden, das dem Fachmann als für den erfindungsgemäßen Zweck geeignet bekannt ist, z.B. in einer Mehrschicht-Coextrusions-Blasfolienanlage, Flachfolienanlage, Mehrschicht-Coextrusionsanlage, oder Mehrschichtkaschierungsanlage.

In einer Ausführungsform wird ein Beutel, umfassend eine Mehrschichtfolie, für medizinische Zwecke bereitgestellt, mit einer oder zwei Außenschichten, wobei die Außenschichten enthalten: ein erstes Polyalphaolefin; ein erstes thermoplastisches Elastomer mit einer Schmelzviskosität eines Schmelzflußindexes nach ISO 1133 von 0,001 bis 6 g/10 min bei 230°C, 2,16 kg; und ein zweites thermoplastisches Elastomer mit einer nach ISO 1133 nicht messbar hohen Schmelzviskosität, die höher ist als die Schmelzviskosität des ersten thermoplastischen Elastomers. Der Schmelzflußindex des ersten thermoplastischen Elastomers kann in einem der folgenden Bereiche liegen: von 0,01 bis 5,5; von 0,05 bis 6; von 0,08 bis 4,8; und von 0,01 bis 5. Das erste Polyalphaolefin kann als Basiskomponente oder Matrix in der Außenschicht vorliegen.

Eine nach ISO 1133 nicht messbar hohe Schmelzviskosität bedeutet im Rahmen von Ausführungsformen, dass die Schmelzviskosität so hoch ist, dass sie nach ISO 1133 nicht mehr oder nicht mehr sinnvoll gemessen werden kann. Das zweite thermoplastische Elastomer mit einer nach ISO 1133 nicht messbar hohen Schmelzviskosität wird hier auch als No Flow Komponente bezeichnet. "No Flow" ist eine Herstellerangabe. Im Falle von No-Flow-Materialien geben die Hersteller keine Werte zum Schmelzflußindex an. Im Rahmen von Ausführungsformen wird unter No Flow ein Schmelzflußindex verstanden, der so niedrig ist, dass die Methode ISO 1133 keine charakteristischen Werte für den Schmelzflußindex ergibt. Das erste thermoplastische Elastomer mit einer Schmelzviskosität eines Schmelzflußindexes nach ISO 1133 von 0,001 bis 6 g/10 min bei 230°C, 2,16 kg wird im Rahmen von Ausführungsformen und Beispielen hier auch als Flow Komponente bezeichnet.

Eine oder mehrere der oben genannten Anforderungen an einen Beutel, umfassend eine Folie, für medizinische Zwecke werden durch hier beschriebene Ausführungsformen der Erfindung erfüllt. Vorzugsweise kann die Mehrschichtfolie gemäß Ausführungsformen drei oder mehr Schichten, vorzugsweise drei bis sieben Schichten, umfassen. Die Außenschicht oder die beiden Außenschichten der Folie sind in Ausführungsformen aus einem Material gewählt, das verhindert, dass Verletzungen dieser Schichten - beispielsweise durch die Handhabung der Folie - unerwünschte Sollbruchstellen hervorrufen, die beim späteren Befüllen des daraus gebildeten Beutels und der extremen Dehnung des Beutels zum Reißen dessen führt. Demgemäß weisen in Ausführungsformen die Außenschicht(en) der Folie im Gegensatz zu einer oder mehreren zusätzlichen Schichten, die durch die Außenschicht(en) geschützt bzw. davon umgeben sind, eine höhere Robustheit gegen mechanische Einflüsse auf.

Weiterhin neigt die Folie gemäß Ausführungsformen während der Lagerung als Mehrkammerbeutel und während einer eventuellen Hitzesterilisation nicht zum Verkleben. Die Folie gemäß Ausführungsformen ermöglicht es gleichzeitig, vorzugsweise bei relativ niedrigen Temperaturen mit einem entsprechenden Schweißwerkzeug Peelnähte herzustellen. Peelnähte zeichnen sich dadurch aus, dass sie durch ein partielles Verschweißen oder Verkleben von Folien durch Wärmebehandlung und Anpressdruck hergestellt werden. Vorzugsweise liegt deshalb die Temperatur für das Bilden der Peelnähte unterhalb der Schweißtemperatur für permanente Schweißnähte.

Ein erfindungsgemäßer Beutel kann aufgrund der Wahl des Materials der Außenschicht(en) und weiterer Schichten außerdem eine hohe elastische Dehnbarkeit ohne große Krafteinwirkung aufweisen. Bisher bekannte Beutel, umfassend Folien, neigten jedoch meist schon bei einer Temperatur der gängigen Hitzesterilisation von 100 bis 120°C, für 5 bis 15 Minuten (ca. 10 Minuten) bei einem Druck zwischen 1,5 und 2,5 bar (ca. 2 bar) zu unerwünschten Klebeverbindungen ohne Anpresswirkung von entsprechenden Schweißwerkzeugen. Mit dem Beutel, umfassend die Mehrschichtfolie gemäß Ausführungsformen wird jedoch ein derartiges Verhalten vermieden.

Die Mehrschichtfolie gemäß Ausführungsformen ermöglicht ferner einen Kompromiss aus zum Teil technisch gegenläufigen Forderungen der Hitzesterilisierbarkeit, des Adhäsionsverhaltens, der mechanischen Robustheit, der elastischen Dehnbarkeit, der Herstellbarkeit von permanenten und peelbaren Fügenähten und der guten Trennbarkeit der Folie nach der Wärmebehandlung. Es hat sich überraschenderweise gezeigt, dass gemäß hier beschriebener Ausführungsformen die Verbindung permanent geschweißter Nähte nur durch Peeling gebrochen werden und nicht durch z.B. Folienbruch oder Delaminierung. Als "permanent" ist in diesem Zusammenhang eine Verbindungsstärke einer Schweißnaht zu verstehen, die den Belastungen, insbesondere Fülldruck, die in einem Großraumbeutel eines Füllvolumens von bis zu 120 l auftreten, standhält. Unter Schweißnähten sind in diesem Zusammenhang alle Nähte zu verstehen, die ihre Festigkeit durch Wärmebehandlung erreichen. Es sind auch solche Nähte eingeschlossen, die ihre Festigkeit nur aufgrund von Mechanismen von Verblockungen (Oberflächenadhäsivkräfte, Verklebungen) erreichen.

Hinsichtlich der elastischen Dehnbarkeit der Folie und des daraus hergestellten Beutels ermöglicht die Folie gemäß hier beschriebener Ausführungsformen, dass eine gleichmäßige Dehnung durch Krafteinwirkung oder Befüllen des Beutels erfolgt. Bei ungleichmäßiger Dehnung des Beutels besteht nämlich die Gefahr, dass einzelne Bereiche überdehnt werden, dagegen andere Bereiche nicht oder weniger gedehnt werden.

In Ausführungsformen dient die Außenschicht oder eine der Außenschichten der Folie als Schicht, die dem Innenraum des späteren Beutels zugewandt ist. Ferner dient in Ausführungsformen die Außenschicht oder eine der Außenschichten als Schicht, die der Außenseite des späteren Beutels zugewandt ist. Die Außenschicht oder die Außenschichten weist/weisen gemäß Ausführungsformen drei Polymer-Komponenten auf, wobei die drei Polymer-Komponenten eine Basiskomponente und zwei weitere Komponenten umfassen können. In anderen Ausführungsformen besteht/bestehen die Außenschicht oder die Außenschichten im Wesentlichen aus den drei Polymer-Komponenten und optionalen Additiven. In einem Beispiel enthält oder enthalten die Außenschicht(en) die Basiskomponente und die zwei weiteren Komponenten. In einem anderen Beispiel enthält oder enthalten die Außenschicht(en) als die drei Polymer-Komponenten ein Matrix-Polymer für eine Matrix und zwei Phasen-Polymere. Als Basiskomponente oder Matrix-Polymer können beispielsweise Polymere mit hohem Anregungs- bzw. Schmelztemperaturbereich, wie z. B. ein Polyalphaolefin, bevorzugt ein Polypropylen-Homopolymer oder ein Polypropylen-Copolymer, verwendet werden. Von den genannten Basiskomponenten oder Matrix-Polymeren ist das Polypropylen-Copolymer bevorzugt. Besonders bevorzugt ist ein Polypropylen-Random-Copolymer. Als die zwei weiteren Komponenten oder Phasen-Polymere eignen sich gemäß Ausführungsformen thermoplastische Elastomere unterschiedlicher Schmelzviskosität. Beispielsweise umfasst die Außenschicht gemäß einer Ausführungsform ein erstes thermoplastisches Elastomer mit einer Schmelzviskosität eines Schmelzflußindexes nach ISO 1133 von 0,001 bis 6 g/10 min bei 230°C, 2,16 kg; und ein zweites thermoplastisches Elastomer mit einer nach ISO 1133 nicht messbar hohen Schmelzviskosität, die höher ist als die Schmelzviskosität des ersten thermoplastischen Elastomers. Der Schmelzflußindex des ersten thermoplastischen Elastomers liegt bevorzugt in einem der folgenden Bereiche: von 0,01 bis 5,5; von 0,05 bis 6; von 0,08 bis 4,8; und von 0,01 bis 5.

Gemäß Ausführungsformen enthält oder enthalten die Außenschicht (en) der Mehrschichtfolie als Thermoplast ein Polyalphaolefin, z.B. Polypropylen, das zudem heterophasig vorliegen kann. Der Thermoplast kann in der oder den Außenschicht(en) der Mehrschichtfolie als Basiskomponente oder Matrix vorliegen. Heterophasig bedeutet, dass verschiedene Phasen vorliegen können. Die Zusammensetzung, eine Heterogenität und eine heterophasige Struktur der Außenschicht(en) unterstützen einzeln oder in beliebiger Kombination eine gute Peelfähigkeit der im späteren Beutel miteinander verschweißten, zu peelenden Schichten. Beispielsweise ist in einer aus dem Polyalphaolefin gebildeten Basiskomponente oder Matrix eine Phase enthalten, die durch das erste thermoplastische Elastomer und das zweite thermoplastische Elastomer gebildet wird. Die Außenschicht oder Außenschichten sind aufgrund der erfindungsgemäßen Zusammensetzung hitzeverwendbar. Die Zusammensetzung der Außenschichten ermöglicht, dass in aus der erfindungsgemäßen Mehrschichtfolie gebildeten Beuteln auch Trockenkonzentrate in Kammern, die durch peelfähige Schweißnähte voneinander getrennt sind, ohne Kontakt zueinander transportiert werden können. Erst bei Behandlungsbeginn im Rahmen einer medizinischen Therapie können die Kammern voneinander durch eintretende Flüssigkeit aufgepeelt werden und so einen großvolumigen Beutel bilden.

In Ausführungsformen kann der Gehalt des ersten thermoplastischen Elastomers in der Außenschicht 20 bis 50 Gew%, bevorzugt 25 bis 40 Gew%, weiter bevorzugt 25 bis 35 Gew% oder 20 bis 30 Gew%, betragen. Ferner kann gemäß Ausführungsformen der Gehalt des zweiten thermoplastischen Elastomers in der Außenschicht 2 bis 20 Gew%, bevorzugt 5 bis 15 Gew%, weiter bevorzugt 3 bis 15 Gew% oder 4 bis 10 Gew%, betragen. Der Rest des Materials der Außenschicht kann im Wesentlichen ein Polyalphaolefin, z.B. ein PP, im Gehalt von 40 bis 70% enthalten. Zu den Polyalphaolefin zählen Polymere mit folgender allgemeiner Monomereinheit CH₂CHR: 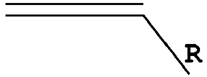 wobei R sein kann: -H, -Methyl, -Ethyl, -Propyl, -Propyl-Isomere, -Butyl und -Butyl-Isomere, -Octyl und -Octyl-Isomere, allgemein alipatische Reste mit 0 bis 20 Kohlenstoff Atomen, Besonders bevorzugt sind PP, PE, Random-Copolymere und Blockcopolymere von Propylen, Ethylen, Butylen, Octen sowie Blends dieser Polymere untereinander, Copolymere, und Blockcopolymere dieser Polymere.

Überraschenderweise ermöglicht der Schichtaufbau der Mehrschichtfolie gemäß Ausführungsformen, der in der/den Außenschicht(en) ein Polyalphaolefin, z.B. ein heterophasiges Polypropylen-Random-Copolymer, und zwei in der Schmelzviskosität und im Molekulargewicht unterschiedliche thermoplastische Elastomere umfasst, dass die Mehrschichtfolie peelfähig und hitzesterilisierbar ist, flexibel dehnbar ist und weitere für medizinische Zwecke geeignete Eigenschaften besitzt. Vor allem die Außenschicht(en) beeinflussen in der Mehrschichtfolie gemäß Ausführungsformen das Dehnverhalten, das Peelverhalten und die Adhäsion zu anderen Folienteilen. Insbesondere der erfindungsgemäße Einsatz des in der Schmelze hoch viskosen zweiten thermoplastischen Elastomers wirkt positiv auf das Adhäsionsverhalten der Außenschicht. Ferner führen der Anteil und die Auswahl des in der Schmelze vergleichsweise niedrig viskosen ersten thermoplastischen Elastomers zu einer geeigneten Peelbarkeit von Schweißnähten, die zwischen zwei Außenschichten ausgebildet sind. Ein besonders geeignetes Peelverhalten kann beispielsweise durch so genanntes heterophasiges Polypropylen-Random-Copolymer, z.B. Bormed SC 220 CF Borealis oder SC 820 CF Borealis, z.B. als Basiskomponente oder Matrix, in der Außenschicht erreicht werden. Die Anteile des in der Schmelze hoch viskosen zweiten thermoplastischen Elastomers neigen nicht zum Verkleben, da sie typischerweise hochmolekular sind.

Die Materialien der Mehrschichtfolie sind in Ausführungsformen außerdem so ausgewählt, dass der Beutel möglichst durchsichtig und flexibel, insbesondere aber biokompatibel ist. Aus Biokompatibilitätsgründen und Umweltgesichtspunkten kann die Verwendung von PVC, das immer einen gewissen Anteil an Weichmachern aufweist, zumindest in der Außenschicht, die nach der Herstellung des Beutels dessen Innenwand bildet, ausgeschlossen sein. Aus den gleichen Gründen können auch Materialien, wie z. B. Haftvermittler, die in das Beutelinnere diffundieren können, ausgeschlossen sein. Für bestimmte Anwendungen ist es darüber hinaus erwünscht, dass die Mehrschichtfolie eine Gasbarriere für Sauerstoff und Kohlendioxid sowie eine Wasserdampfbarriere aufweist, die eine Diffusion dieser Gase sowohl in als auch aus dem Beutel verhindert.

In Ausführungsformen ist das erste Polyalphaolefin ausgewählt aus: Polypropylen, Polypropylen-Copolymer, Polypropylen-Random-Copolymer, heterophasiges Polypropylen-Random-Copolymer. Ferner ist in Ausführungsformen das erste und/oder das zweite thermoplastische Elastomer ausgewählt aus: Styrol-Blockcopolymeren, hydrogenierten Styrol-Blockcopolymeren, Styrol-Butadien-Styrol-Copolymer, Styrol-Isopren-Styrol-Copolymer, Styrol-Ethylen-Butylen-Styrol-Copolymer, Styrol-Ethylen-Propylen-Copolymer, Styrol-Ethylen-Propylen-Styrol-Copolymer, Styrol-Ethylen-Ethylen-Propylen-Styrol-Copolymer und Styrol-Ethylen-Butylen-Copolymer.

Gemäß einer bevorzugten Ausführungsform umfasst das erste Polyalphaolefinein heterophasiges Polypropylen-Random-Copolymer; und/oder das erste thermoplastische Elastomer umfasst ein Styrol-Ethylen-Butylen-Styrol-Copolymer; und/oder das zweite thermoplastische Elastomer ist ausgewählt aus: Styrol-Ethylen-Propylen-Styrol-Copolymer, Styrol-Ethylen-Ethylen-Propylen-Styrol-Copolymer.

Gemäß einer Ausführungsform umfasst die Mehrschichtfolie eine weitere Schicht, wobei die weitere Schicht ein drittes thermoplastisches Elastomer mit einer Schmelzviskosität eines Schmelzflußindexes nach ISO 1133 von 0,001 bis 6 g/10 min bei 230°C, 2,16 kg und ein zweites Polyalphaolefin enthält. Der Schmelzflußindex des dritten thermoplastischen Elastomers kann in einem der folgenden Bereiche liegen: von 0,01 bis 5,5; von 0,05 bis 6; von 0,08 bis 4,8; und von 0,01 bis 5. Der Schmelzflussindex des zweiten Polyalphaolefins, z.B. PP, kann 3 bis 8 g/10 min, 230 °C, 2,16 Kg betragen.
Beispielsweise besitzt das zweite Polyalphaolefin, das ein Polypropylen sein kann und das die Phase der weiteren Schicht bildet, eine Schmelzviskosität eines Schmelzflußindex nach ISO 1133 von 4g/10min. Es kann in einem Mehrschichtverbund der erfindungsgemäßen Folie bevorzugt sein, dass alle Schichten ein ungefähr ähnliches Dehnverhalten vorweisen. Die Verwendung der Folie ist für Beutel vorgesehen, bei denen Abschnitte der Beutelwand durch Befüllen um ein Mehrfaches der Ausgangsdimensionen gedehnt werden können. Würden sich die Schichten unter Beanspruchung unterschiedlich dehnen, so wären eventuell Delaminationen zu beobachten. Die mechanischen Festigkeiten wie Reißfestigkeit oder Schlagzähigkeit wären herabgesetzt. Zusätzlich zu den Anforderungen hinsichtlich des Dehnverhaltens kann bevorzugt sein, dass die Außenschicht oder Außenschichten eine geringe Neigung zur Verblockung (Verkleben unter Wärme und Druck) bei gleichzeitiger Schweißbarkeit vorweisen.

Die Materialien der weiteren Schicht gemäß Ausführungsformen, die beispielsweise eine Mittelschicht angeordnet zwischen zwei der hier beschriebenen Außenschichten ist, ermöglichen eine besonders erwünschte Flexibilität der Mehrschichtfolie und führen zu der Eigenschaft der weiteren Schicht, dass sie eine Dehnenergie weitgehend elastisch aufnimmt. Beispielsweise führt die weitere Schicht mit 70 Gew% SEBS (Styrol-Ethylen-Butylen-Styrol-Copolymer) und 30 Gew% eines Random Polypropylens mit einem Anteil von 4 Gew% Ethylen zu einem besonders geeigneten Dehnverhalten der Mehrschichtfolie. Eine Verbesserung der Formstabilität der Mehrschichtfolie während einer Hitzesterilisierung kann dadurch bewirkt werden, dass das dritte thermoplastische Elastomer in der Schmelze niedrigviskos ist.

In Ausführungsformen kann der Gehalt des dritten thermoplastischen Elastomers in der weiteren Schicht 40 bis 90 Gew%, bevorzugt 50 bis 80 Gew%, noch bevorzugter 55 bis 75 Gew%, betragen, und/oder der Gehalt des Polyalphaolefinsin der weiteren Schicht kann 10 bis 60 Gew%, bevorzugt 25 bis 45 Gew% betragen.

In einer Mehrschichtfolie gemäß hier beschriebener Ausführungsformen ist das dritte thermoplastische Elastomer ausgewählt aus: Styrol-Blockcopolymeren, hydrogenierten Styrol-Blockcopolymeren, Styrol-Isopren-Styrol-Copolymer, Styrol-Ethylen-Butylen-Styrol-Copolymer, Styrol-Ethylen-Propylen-Copolymer, Styrol-Ethylen-Propylen-Styrol-Copolymer, und Styrol-Ethylen-Ethylen-Propylen-Styrol-Copolymer. In Ausführungsformen ist das zweite Polyalphaolefin ausgewählt aus Polypropylen, Polypropylen-Copolymer, Polypropylen-Random-Copolymer, das heterophasig sein kann, und Polypropylen-Homopolymer, und umfasst optional ein Ethylen-Comonomer. Beispielsweise handelt es sich um blockartig aufgebaute Copolymere mit Styrolblöcken und Blöcken bestehend aus Copolymerisaten der Propyl-, Butyl- und/oder Ethyl-Wiederholungseinheiten.

Gemäß einer bevorzugten Ausführungsform umfasst das dritte thermoplastische Elastomer ein Styrol-Ethylen-Butylen-Styrol-Copolymer, und/oder das zweite Polyalphaolefin umfasst ein Polypropylen-Random-Copolymer oder ein Polypropylen-Random-Copolymer mit Ethylen als Comonomer.

In hier beschriebenen Ausführungsformen besitzt die Mehrschichtfolie zwei Außenschichten und die weitere Schicht ist zwischen den zwei Außenschichten angeordnet.

Ausführungsformen der Mehrschichtfolie umfassen eine oder zwei Außenschichten mit jeweils einer Dicke von ungefähr 5 bis 20 µm, 7 bis 20 µm, 10 bis 20 µm, 7 bis 18 µm und 7 bis 15 µm, wobei die weitere Schicht eine Dicke von ungefähr 50 bis 500 µm, bevorzugt 50 bis 150 µm, besitzen kann.

Zudem kann in hier beschriebenen Ausführungsformen die Mehrschichtfolie in der einen Außenschicht oder in den zwei Außenschichten und/oder in der weiteren Schicht Additive in einem Gehalt unter 5000 ppm oder unter 200 ppm aufweisen.

In einer Ausführungsform weist die Mehrschichtfolie in Längsrichtung der Extrusion der Folie eine Reißdehnung von 300 % bis 750 %, bevorzugt 350 % bis 700 %, mehr bevorzugt 500 % bis 700 % und am meisten bevorzugt 600 % bis 700 %, und in Querrichtung der Extrusion der Folie von 300 % bis 750 %, bevorzugt 350 % bis 700 %, mehr bevorzugt 500 % bis 700 % und am meisten bevorzugt 600 % bis 700 % auf. Unter Reißdehnung, auch Bruchdehnung genannt, versteht man das prozentuale Verhältnis der Längenänderung ΔL (beim Bruch) zur Ausgangslänge und ist ein Maß für die maximale Zugdehnung vor dem Anriss der Folie. Sie drückt die Fähigkeit eines Werkstoffes aus, Formänderungen ohne Rissbildung zu folgen. Die Reißdehnung wird durch einen Zugversuch gemäß DIN EN ISO 527-3 gemessen, an einem Probenstreifen mit 15 mm Breite, einer Einspannlänge von 50 mm, einer Vorspannkraft von 0,5 N und einer Vorschubgeschwindigkeit von 200 mm/min.

Eine Fähigkeit zur Längenänderung in Längsrichtung der Extrusion der Folie im oben genannten Bereich führt dazu, dass ein daraus hergestellter Beutel, während er mit Dialysat (verbraucht oder frisch) befüllt oder entleert wird, einer Volumenänderung unterliegt, ohne dass er vor Obergrenzen Risse bildet. Das bringt mit sich, dass im unbefüllten Zustand nur wenig Material erforderlich ist, jedoch trotzdem ein großes Fassungsvolumen im befüllten Zustand vorliegt. Dadurch kann ein Produkt bereit gestellt werden, das nur ein geringes Abfallvolumen mit sich bringt. Dies ist insbesondere unter Umweltschutzaspekten erwünscht.

Des Weiteren kann die Mehrschichtfolie in Ausführungsformen vorzugsweise in Längsrichtung eine Reißfestigkeit, auch Zugfestigkeit genannt, von 20 N/mm² bis 50 N/mm², bevorzugt 25 N/mm² bis 42 N/mm², bevorzugter 30 bis 42 N/mm², und mehr bevorzugt 35 N/mm² bis 42 N/mm², und in Querrichtung der Extrusion der Folie von 10 N/mm² bis 40 N/mm², bevorzugt 15 N/mm² bis 36 N/mm², bevorzugter 20 bis 36 N/mm², noch bevorzugter 25 bis 36 N/mm², und mehr bevorzugt 30 N/mm² bis 36 N/mm² aufweisen.

Unter "Reißfestigkeit" versteht man die Zugspannung, die auf einen Gegenstand im Augenblick des Reißens ausgeübt wird. Die Reißfestigkeit wird in einem Zugversuch gemäß der DIN EN ISO 527-3 gemessen, an einem Probenstreifen mit 15 mm Breite, einer Einspannlänge von 50 mm, einer Vorspannkraft von 0,5 N und einer Vorschubgeschwindigkeit von 200 mm/min. Eine Reißfestigkeit unterhalb einer Untergrenze ist ungünstig, da der Beutel sonst durch Überdehnung früh reißt. Oberhalb einer Obergrenze der Reißfestigkeit ist der Beutel zwar sehr reißfest, jedoch nicht ausreichend dehnbar.

Gemäß Ausführungsformen kann die Mehrschichtfolie zudem durch eine Kraft von ungefähr 10 N um 100 %, von ungefähr 20 N um 400 % und von ungefähr 55 N um 600 % gedehnt werden. Die Dehnbarkeit wurde hier anhand eines Zugversuchs der DIN EN ISO 527-3 gemessen, an einem Probenstreifen mit 15 mm Breite, einer Einspannlänge von 50 mm, einer Vorspannkraft von 0,5 N und einer Vorschubgeschwindigkeit von 200 mm/min. Eine hohe Dehnbarkeit der Mehrschichtfolie hat den Vorteil, dass der Beutel im unbefüllten Zustand eine geringe Größe aufweist und somit einfach handhabbar ist. Zudem ist der Materialbedarf durch die starke Dehnbarkeit des Materials gering. Somit wird auch eine einfachere Fertigung und Verpackung des Materials ermöglicht.

Beispiele von hier beschriebenen Ausführungsformen sind folgende Dreischichtfolien, die in Folientypen eingeteilt sind. In diesen Beispielen wird eine der beiden Außenschichten als Innenschicht, d.h. die das Innere des daraus zu bildenden Beutels umschließende Schicht, bezeichnet.

| | |
|---|---|
| Folientyp 1: | Innenschicht: Schichtdicke: 10 bis 20 µm, 10 Gew% Styrol-Ethylen-Propylen-Styrol-Copolymer Septon 2005, Kuraray (No Flow), 30 Gew% Styrol-Ethylen-Butylen-Styrol-Copolymer Septon 8004 (Schmelzviskosität < 0,1 g/10min (230°C, 2,16Kg), und 60 Gew% Random Polypropylen Bormed SC 820 Borealis |
| | Mittelschicht: Schichtdicke: 80 bis 150 µm, 30 Gew% Styrol-Ethylen-Butylen-Styrol-Copolymer Tuftec 1062 Asahi (Schmelzviskosität von ungefähr 4 g/10min), 70 Gew% Random Polypropylen PP-R RD808 Borealis |
| | Außenschicht: analog Innenschicht |
| Folientyp 2: | Innenschicht: Schichtdicke: 10 bis 20 µm, Styrol-Ethylen-Ethylen-Propylen-Styrol-Copolymer Septon 4077 Kuraray (No Flow), 30 Gew% Styrol-Ethylen-Butylen-Styrol-Copolymer Tuftec 1062 Asahi (Schmelzviskosität von ungefähr 4 g/10min), 60 Gew% Random Polypropylen Bormed SC 820 Borealis |
| | Mittelschicht: Schichtdicke: 80 bis 150 µm, 70 Gew% Styrol-Ethylen-Butylen-Styrol-Copolymer Kraton 1645MO Kraton Polymers (Schmelzviskosität von ungefähr 4 g/10min), 30 Gew% Random Polypropylen PP-R RD808 Borealis |
| | Außenschicht: analog Innenschicht |
| Folientyp 3: | Innenschicht: Schichtdicke: 10 bis 20 µm, 15 Gew% Styrol-Ethylen-Propylen-Styrol-Copolymer Septon 2005 Kuraray (No Flow), 25 Gew% Styrol-Ethylen-Butylen-Styrol-Copolymer Kraton 1645MO Kraton Polymers, und 60 Gew% Random Polypropylen Bormed SC 820 Borealis |
| | Mittelschicht: Schichtdicke: 80 bis 150 µm, 70 Gew% Styrol-Ethylen-Butylen-Styrol-Copolymer Septon 8004 Kuraray, 30 Gew% Random Polypropylen, PP-R RD808 Borealis |
| | Außenschicht: analog Innenschicht |

Die Mehrschichtfolie nach einer der hier beschriebenen Ausführungsformen kann zur Herstellung von Beuteln zur Aufnahme von Blut oder Blutkomponenten oder medizinischen Lösungen verwendet werden, wobei die Dicke der weiteren Schicht der Mehrschichtfolie bevorzugt in einem Bereich von 100 bis 500 µm liegt. Ferner kann die Mehrschichtfolie nach einer der hier beschriebenen Ausführungsformen zur Verwendung in medizinischen Pumpen eingesetzt werden, wobei die Dicke der weiteren Schicht der Mehrschichtfolie bevorzugt in einem Bereich von 50 bis 150 µm liegt. Eine weitere Verwendung der Mehrschichtfolie nach Ausführungsformen ist in der Herstellung eines Mehrkammerbeutels zur Verwendung in der Hämodialyse oder Peritonealdialyse oder einer Hämodialyse- oder Peritonealdialysevorrichtung, insbesondere als Behälter für eine Dialysierflüssigkeit in einer Hämodialyse- oder Peritonealdialysevorrichtung.

Gemäß einer anderen Ausführungsform wird ein Verfahren zur Herstellung der Mehrschichtfolie nach einer der hier beschriebenen Ausführungsformen bereitgestellt, wobei die Mehrschichtfolie durch Coextrusion hergestellt wird.

Im Folgenden werden weitere Beispiele von Ausführungsformen unter Bezugnahme auf die Figuren beschrieben. Die Figuren zeigen:
- Fig. 1: eine Messung zur Verblockung für eine Folie eines Beispiels;
- Fig. 2: eine Messung zur Verblockung für eine Folie eines Beispiels;
- Fig. 3: eine Messung zur Verblockung für eine Folie eines Beispiels;
- Fig. 4: eine Messung zur Verblockung für eine Folie eines Beispiels;
- Fig. 5: die Peelkraft in N in Abhängigkeit von der Dehnung in % für eine Folie eines Beispiels;
- Fig. 6: die Peelkraft in N in Abhängigkeit von der Dehnung in % für eine Folie eines Beispiels;
- Fig. 7: die Peelkräfte zweier Folien von Beispielen in Abhängigkeit von der Temperatur bei der Herstellung von Peelnähten;
- Fig. 8: eine Vergrößerung der Figur 7 im Bereich 114 bis 124 °C; und
- Fig. 9: die Peelkräfte zweier Folien von Beispielen in Abhängigkeit von der Temperatur bei der Herstellung von Peelnähten.

### Beispiele

Für die Beispiele 1 bis 3 wurden durch Coextrusion Mehrschichtfolien hergestellt, während für die Beispiele 4 bis 6 Vergleichsfolien verwendet wurden. Die jeweiligen Beispiele haben folgenden Schichtaufbau:

### Beispiel 1:

| | |
|---|---|
| Außenschicht: | Schichtdicke: 10 µm |
| | 60 Gew% Random Polypropylen Bormed SC 220; |
| | 5 Gew% Styrol-Ethylen-Butylen-Styrol-Copolymer Septon 2005 Kuraray; |
| | 35 Gew% Styrol-Ethylen-Butylen-Styrol-Copolymer Septon 8004 Kuraray |
| | |
| Mittelschicht: | Schichtdicke: 100 µm |
| | 70 Gew% einer Mischung aus 60 Gew% Styrol-Ethylen-Butylen-Styrol-Copolymer Septon 8004 Kuraray, 40 Gew% Random Polypropylen mit 4 Gew% Ethylen, PP-R RD 204 Borealis; |
| | 30 Gew% Styrol-Ethylen-Butylen-Styrol-Copolymer Tuftec H 1221 |
| Außenschicht: | Schichtdicke: 10 µm |
| | 60 Gew% Random Polypropylen Bormed SC 220; |
| | 5 Gew% Styrol-Ethylen-Butylen-Styrol-Copolymer Septon 2005 Kuraray; |
| | 35 Gew% Styrol-Ethylen-Butylen-Styrol-Copolymer Septon 8004 Kuraray |

### Beispiel 2:

| | |
|---|---|
| Außenschicht: | Schichtdicke: 10 µm |
| | 60 Gew% Random Polypropylen Bormed SC 220; |
| | 5 Gew% Styrol-Ethylen-Butylen-Styrol-Copolymer Septon 4077 Kuraray; |
| | 35 Gew% Styrol-Ethylen-Butylen-Styrol-Copolymer Septon 8004 Kuraray |
| | |
| Mittelschicht: | Schichtdicke: 100 µm |
| | 70 Gew% einer Mischung aus 60 Gew% Styrol-Ethylen-Butylen-Styrol-Copolymer Septon 8004 Kuraray, 40 Gew% Random Polypropylen mit 4 Gew% Ethylen, PP-R RD 204 Borealis; |
| | 30 Gew% Styrol-Ethylen-Butylen-Styrol-Copolymer Tuftec H 1221 |
| | |
| Außenschicht: | Schichtdicke: 10 µm |
| | 60 Gew% Random Polypropylen Bormed SC 220; |
| | 5 Gew% Styrol-Ethylen-Butylen-Styrol-Copolymer Septon 4077 Kuraray; |
| | 35 Gew% Styrol-Ethylen-Butylen-Styrol-Copolymer Septon 8004 Kuraray |

### Beispiel 3:

| | |
|---|---|
| Außenschicht: | Schichtdicke: 10 µm |
| | 60 Gew% Random Polypropylen Bormed SC 220; |
| | 20 Gew% Styrol-Ethylen-Butylen-Styrol-Copolymer Septon 8004 Kuraray |
| | |
| Mittelschicht: | Schichtdicke: 100 µm |
| | 70 Gew% einer Mischung aus 60 Gew% Styrol-Ethylen-Butylen-Styrol-Copolymer Septon 8004 Kuraray, 40 Gew% Random Polypropylen mit 4 Gew% Ethylen, PP-R RD 204 Borealis; |
| | 30 Gew% Styrol-Ethylen-Butylen-Styrol-Copolymer Tuftec H 1221 |
| | |
| Außenschicht: | Schichtdicke: 10 µm |
| | 60 Gew% Random Polypropylen Bormed SC 220; |
| | 20 Gew% Styrol-Ethylen-Butylen-Styrol-Copolymer Septon 8004 Kuraray |

### Vergleichsbeispiel 1

| | | |
|---|---|---|
| Außenschicht | PP/SEBS Schichtdicke 8 µm | PP 40 % RD 204 CF; Fa. Borealis |
| | | SEBS 50 % Septon 8004, Fa. Kuraray |
| Mittelschicht | PE/SEBS Schichtdicke 97 µm | SEBS 25 % Tuftec H1062, Fa. Asahi |
| | | PE 40 % Engage 8003, Fa. Dow |
| | | SEBS 35 % Septon 8004, Fa. Kuraray |
| Außenschicht | PP/SEBS Schichtdicke 15 µm | PP 40 % RD 204 CF, Fa. Borealis |
| | | SEBS 60 % Septon 8004, Fa. |
| | | Kuraray |

### Vergleichsbeispiel 2

| | | |
|---|---|---|
| Außenschicht | PP Schichtdicke 20 µm | 100% Polypropylen-EthylenCopolymer 4-8% Ethylen |
| Mittelschicht | PP/SEBS Schichtdicke 120 µm | 60 % SEBS/40 % PP |
| Außenschicht | PP Schichtdicke 20 µm | 100 % Polypropylen |

### Vergleichsbeispiel 3

| | | |
|---|---|---|
| Außenschicht | PP Schichtdicke 20 µm | 20% SEBS, 80% Polypropylen-Ethylen-Copolymer 4% Ethylen Anteil |
| Mittelschicht | PP/SEBS Schichtdicke 160 µm | 35% SEBS, 65% Polypropylen-Ethylen-Copolymer 4% Ethylen Anteil |
| Außenschicht | PP Schichtdicke 20 µm | 100 % Polypropylen-Ethylen Copolymer 4 % Ethylen Anteil |

### Versuch 1

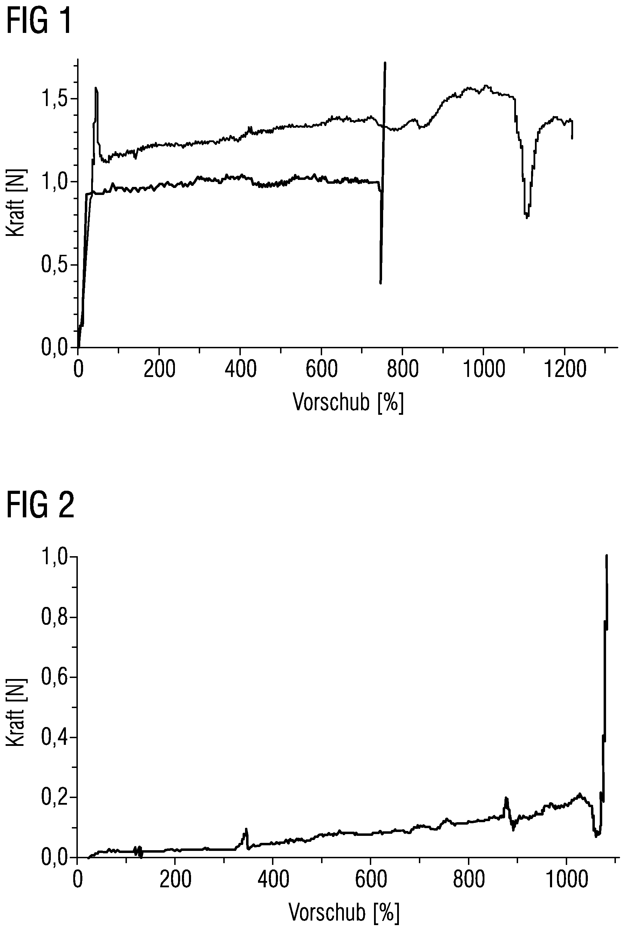

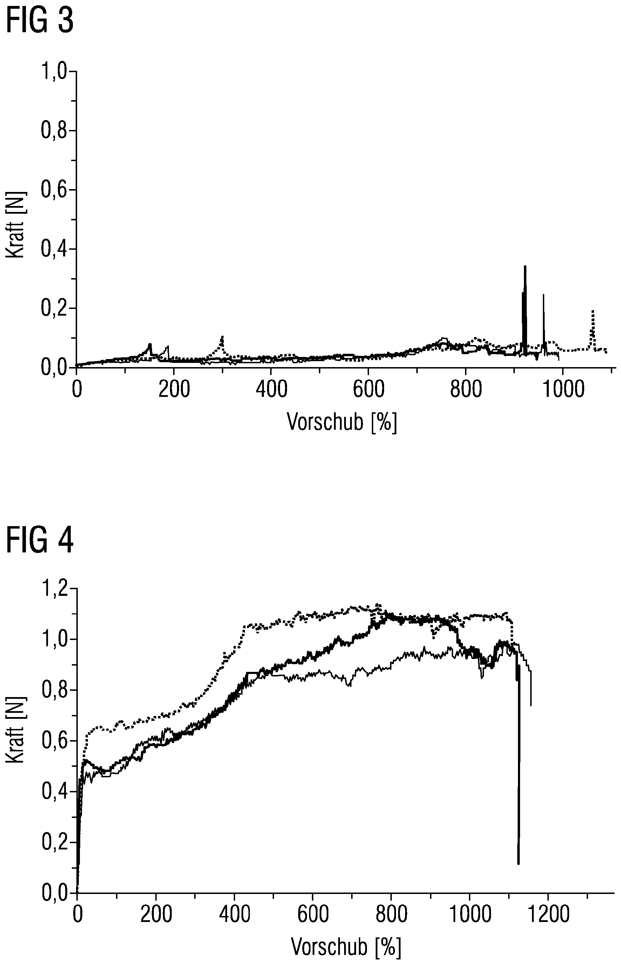

In diesem Versuch wurde ein Test durchgeführt, um das Dehnungs- und Klebeverhalten der Folien des Beispiels 1 (1 Stück), des Beispiels 2 (drei Stück) und des Beispiels 3 (drei Stück) im Vergleich zur Folie des Vergleichsbeispiels 1 (zwei Stück) zu ermitteln, die jeweils eine Dicke von 120 µm hatten. Dabei wurden die jeweiligen Mehrschichtfolien bei 124°C sterilisiert. Nach der Sterilisation wurde das Klebeverhalten der Mehrschichtfolien aneinander mit einer Zugprüfmaschine in einem "T"-Peeltest analogen Zugversuch an einem 15 mm breiten Probestreifen untersucht. Die Ergebnisse sind in den Figuren 1 bis 4 gezeigt. Die Figuren zeigen Messungen zur Verblockung. Dabei gibt Fig. 1 Zugversuche mit der Folie des Vergleichsbeispiels 1 wieder. Fig. 2 stellt einen Zugversuch mit der Folie des Beispiels 1 dar. Fig. 3 zeigt Zugversuche mit der Folie des Beispiels 2 und Fig. 4 zeigt Zugversuche mit der Folie des Beispiels 3.

In den Zugversuchen wurde die Verklebung von aufeinander gelegten Mehrschichtfolien gemessen. Um eine Aussage über das Klebeverhalten treffen zu können, wurden Mehrschichtfolien entsprechend der Beutelkonstruktion übereinandergelegt, mit einem Gewicht einer Kraft von ungefähr 200 bis 400 N/mm² beschwert, umverpackt und bei 124 °C und 100% relativer Luftfeuchtigkeit 10 min lang sterilisiert. Beutelkonstruktion bedeutet hier, dass 2 Stücke der jeweiligen Mehrschichtfolie übereinandergelegt wurden, um Gegebenheiten eines beispielhaften Beutels nachzubilden. Auf der Ordinate der Figuren 1 bis 4 ist die Kraft aus dem jeweiligen Zugversuch für einen 15 mm breiten Folienteststreifen der Beutelkonstruktion wiedergegeben. Auf der Abszisse der Figuren 1 bis 4 ist der Vorschub der Einspannbacken gezeigt. Eine hohe Kraft in N in Abhängigkeit vom Vorschub in % bedeutet, dass die 2 Stücke der jeweiligen Mehrschichtfolie aneinander haften. Wie die Figuren 1 und 4 zeigen, wurden für die Folien des Vergleichsbeispiels 1 und des Beispiels 3 hohe Kräfte gemessen. Im Vergleich dazu wurden für die Folien der Beispiele 1 und 2 niedrige Kräfte gemessen und zeigen daher kaum Anhaftungen der jeweiligen Mehrschichtfolie an sich selbst. Die Folien der Beispiele 1 und 2 weisen daher nach einer Lagerung keine Verklebungen auf.

### Versuche 2 und 3

Es wurden im Versuch 2 mit den Folien des Beispiels 1 und des Vergleichsbeispiels 1 jeweils Peelnähte bei gleichen Temperaturen hergestellt und die Peelkräfte der Peelnähte verglichen. Die Vergleiche wurden durch Messen der Peelkräfte, d.h. der Kräfte, die zum Peelen von Schweißnähten erforderlich sind, durchgeführt. Desweiteren wurden im Versuch 3, zur Ermittlung von Siegeltemperaturkurven, Peelnähte der Folien des Beispiels 1 und des Vergleichsbeispiels 1 und der Folien der Vergleichsbeispiele 2 und 3 bei unterschiedlichen Temperaturen erzeugt und die zugehörigen Peelkräfte verglichen. Siegeltemperaturkurven werden hier die Peelkräfte in Abhängigkeit von der Temperatur bei der Herstellung der Peelnähte genannt.

Zur Erzeugung der Peelnähte wurde eine Laborschweißpresse Hot Tack (Firma Brugger) mit oberen Backen aus Metall und unteren Backen aus Silikon, die auf unterschiedliche Temperaturen eingestellt werden konnten, verwendet. Das Schweißen wurde jeweils einige Sekunden lang mit einem Pressdruck von 495 N und einem Schweißdruck von 0,1 bis 3 N/mm² durchgeführt.

### Versuch 2

Die Peelnähte der Folien des Beispiels 1 und des Vergleichsbeispiels 1 wurden aus 15 mm breiten Teststreifen in der Hot Tack Schweißpresse mit einer Temperatur der oberen Backe von 118°C, einer Temperatur der unteren Backe von 80°C und einer Schweißzeit von 3 s hergestellt. Dann wurden die erzeugten Peelnähte im T-Peel-Testverfahren geprüft. Die Zugversuche wurden in Anlehnung an die DIN EN ISO 527-3 durchgeführt. Der Probestreifen wurde so eingespannt, dass eine "T" Form durch den Probenstreifen entsteht. Der Test wurde unter folgenden Bedingungen durchgeführt:
Vorschubgeschwindigkeit von 200 mm/min
Messen der im Peeltest auftretenden maximalen Kraft
Einspannlänge der Teststreifen: 50 mm
Eingestellte Vorkraft: 0,5 N
Probenbreite: 15 mm

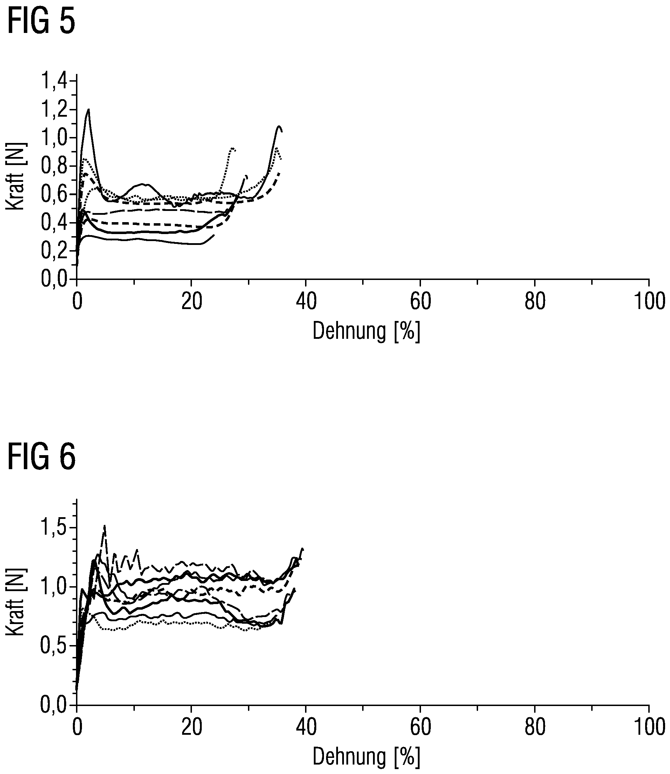

Die Tabellen 1 und 2 und die Figuren 5 und 6 zeigen die Messergebnisse der Tests, wobei jeweils 8 Stück der verschiedenen Folien getestet wurde. Die Linien in den Kraft/Dehnungsdiagrammen der Fig. 5 und 6 kennzeichnen die Testverläufe für die einzelnen Folien der Nr. 1 bis 8 bzw. 9 bis 16, die für die Tests verwendet wurden. Der Begriff Peelkraft, in den Tabellen 1 und 2 mit Zugfestigkeit bezeichnet, entspricht der Kraft, die jeweils als die zum Lösen der Peelnähte nötige Kraft gemessen wurde.

**Tabelle 1**

| Peelnähte Beutel Beispiel 1-(Fig. 5): Schweißparameter: oben 118°C, unten 80°C, t = 3s | | |
|---|---|---|
| Folien-Nr. | Bemerkung | Zugfestigkeit N (15 mm) |
| 1 | Beispiel 1 | 0,3 |
| 2 | | 0, 9 |
| 3 | | 0,8 |
| 4 | | 0,5 |
| 5 | | 0,7 |
| 6 | | 1,2 |
| 7 | | 0, 9 |
| 8 | | 0, 6 |

**Tabelle 2**

| Peelnähte Beutel Vergleichsbeispiel 1 (Fig. 6): Schweißparameter: oben 118°C, unten 80°C, t = 3s | | |
|---|---|---|
| Folien-Nr. | Bemerkung | Zugfestigkeit N (15 mm) |
| 9 | Vergleichsbeispiel 1 | 1,2 |
| 10 | | 1,2 |
| 11 | | 1,3 |
| 12 | | 0,8 |
| 13 | | 1,2 |
| 14 | | 1,2 |
| 15 | | 1,5 |
| 16 | | 0,8 |

Die Figur 5 und die Tabelle 1 zeigen die Messergebnisse für die Folie des Beispiels 1, während die Figur 6 und die Tabelle 2 die Messergebnisse für die Folie des Vergleichsbeispiels 1 darstellen. Diese beiden Folien besitzen eine vergleichbare Weichheit und Flexibilität. Die Folie des Beispiels 1 ergibt Peelkräfte von ca. 0,3 bis 1,2 N/15mm, mit einem Mittelwert von 0,73 N/15mm am Maximum und einer Standardabweichung von 0,28. Die Folie des Vergleichsbeispiels 1 ergibt Peelkräfte von ca. 0,8 bis 1,5 N/15mm, mit einem Mittelwert von 1,15 N/15mm am Maximum und einer Standardabweichung von 0,24. Somit besitzt die Folie des Beispiels 1 im Vergleich zur Folie des Vergleichsbeispiels 1 die geringeren Peelkräfte. Die Peelnähte der Folie des Beispiels 1 zeigen damit eine verbesserte Peelbarkeit bzw. Peelfähigkeit.

### Versuch 3

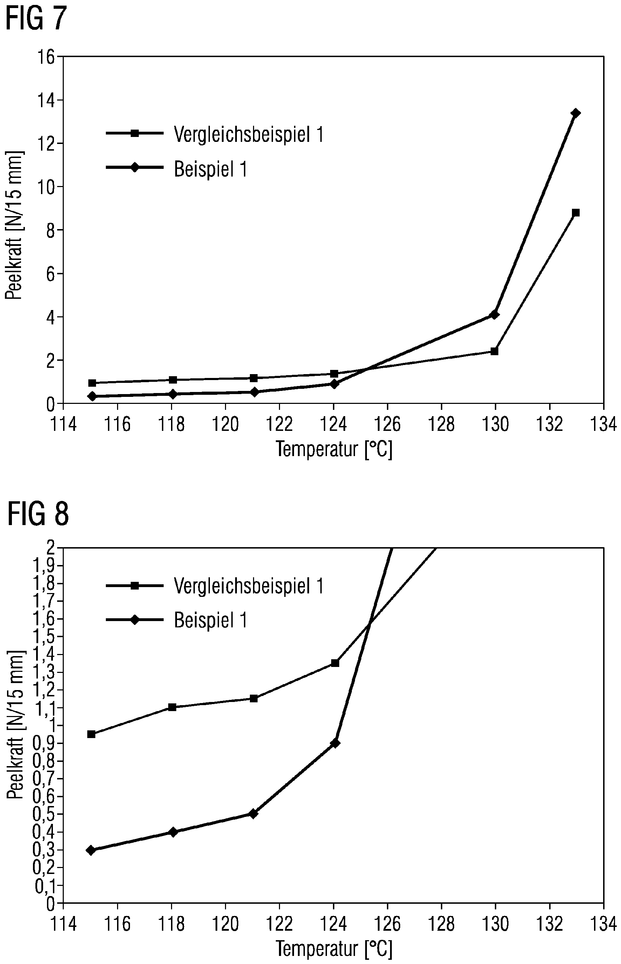

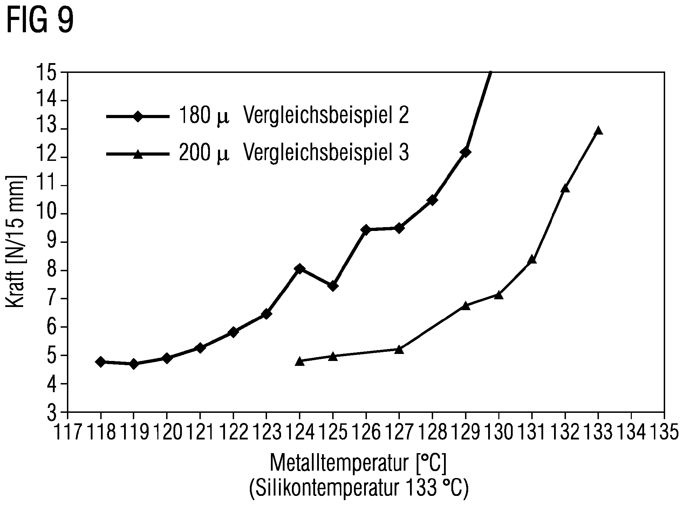

Zur Erzeugung von Peelnähten zur Ermittlung der Siegeltemperaturkurven wurde die Laborschweißpresse Hot Tack mit oberen Backen aus Metall und unteren Backen aus Silikon verwendet. Die obere Backe wurde auf verschiedene Temperaturen im Bereich von 115 bis 133°C eingestellt, während die untere Backe für die Folien des Beispiels 1 und des Vergleichsbeispiels 1 konstant auf 80°C und für den Vergleichstest mit den Folien der Vergleichsbeispiele 2 und 3 konstant auf 133°C gehalten wurde. Das Schweißen wurde jeweils 5 Sekunden lang mit einem Pressdruck von 495 N und einem Schweißdruck von 0,1 bis 3 N/mm durchgeführt. Die Figuren 7 bis 9, wobei Fig. 8 eine Vergrößerung der Figur 7 im Bereich 114 bis 124 °C wiedergibt, zeigen deutlich die vergleichsweise niedrigeren Peelkräfte in der Siegeltemperaturkurve, d.h. die überlegene Peelbarkeit, der Folie des Beispiels 1 gegenüber den Folien der Vergleichsbeispiele 1 bis 3.

Der Versuch 3 ergibt ferner, dass Peelnahtkraftbereiche von 0,7 bis 1,15 N/15mm nur mit sehr weichen flexiblen Folien machbar sind. Steifere Folien, wie diejenigen der Vergleichsbeispiele 2 und 3, lassen keine vernünftig sichere Naht zu, da aufgrund der Steifigkeit der Folien äußere Kräfte vorwiegend auf die Peelnähte einwirken und diese sich deshalb sehr leicht ungewollt öffnen. Im Gegensatz dazu lassen sich Peelnähte der Folie des Beispiels 1, die geringe Peelkräfte zeigt, aufgrund ihres weichen Charakters und der somit nicht auf die Naht unmittelbaren Einwirkung der Kraft auf die Naht sicher herstellen und neigen nicht dazu, sich ungewollt zu öffnen.

Die Folie des Beispiels 1 erwies sich zudem, wie im Versuch 1 gezeigt wurde, im Vergleich zur Folie des Vergleichsbeispiels 1 hinsichtlich der Antihaftwirkung unter Temperatureinwirkung als deutlich besser.

## Patentansprüche

1. Beutel für medizinische Zwecke, umfassend eine Mehrschichtfolie mit einer oder zwei Außenschichten, wobei die Außenschichten enthalten:
ein erstes Polyalphaolefin;
ein erstes thermoplastisches Elastomer mit einer Schmelzviskosität eines Schmelzflußindexes nach ISO 1133 von 0,001 bis 6 g/10 min bei 230°C, 2,16 kg; und
ein zweites thermoplastisches Elastomer mit einer nach ISO 1133 nicht messbar hohen Schmelzviskosität, die höher ist als die Schmelzviskosität des ersten thermoplastischen Elastomers.

2. Beutel nach Anspruch 1, wobei
der Gehalt des ersten thermoplastischen Elastomers in der Außenschicht 20 bis 50 Gew%, bevorzugt 25 bis 35 Gew%, beträgt, und/oder
der Gehalt des zweiten thermoplastischen Elastomers in der Außenschicht 2 bis 20 Gew%, bevorzugt 5 bis 15 Gew%, beträgt.

3. Beutel nach einem der vorstehenden Ansprüche, wobei das erste Polyalphaolefin ausgewählt ist aus:
Polypropylen, Polypropylen-Copolymer, Polypropylen-Random-Copolymer, heterophasiges Polypropylen-Random-Copolymer;
und/oder
das erste und/oder das zweite thermoplastische Elastomer ausgewählt ist aus: Styrol-Blockcopolymeren, hydrogenierten Styrol-Blockcopolymeren, Styrol-Butadien-Styrol-Copolymer, Styrol-Isopren-Styrol-Copolymer, Styrol-Ethylen-Butylen-Styrol-Copolymer, Styrol-Ethylen-Propylen-Copolymer, Styrol-Ethylen-Propylen-Styrol-Copolymer, Styrol-Ethylen-Ethylen-Propylen-Styrol-Copolymer und Styrol-Ethylen-Butylen-Copolymer.

4. Beutel nach einem der vorstehenden Ansprüche, wobei das erste Polyalphaolefin ein heterophasiges Polypropylen-Random-Copolymer umfasst; und/oder das erste thermoplastische Elastomer ein Styrol-Ethylen-Butylen-Styrol-Copolymer umfasst; und/oder das zweite thermoplastische Elastomer ausgewählt ist aus: Styrol-Ethylen-Propylen-Styrol-Copolymer, Styrol-Ethylen-Ethylen-Propylen-Styrol-Copolymer.

5. Beutel nach einem der vorstehenden Ansprüche, umfassend:
eine weitere Schicht, wobei die weitere Schicht enthält:
ein drittes thermoplastisches Elastomer mit einer Schmelzviskosität eines Schmelzflußindexes nach ISO 1133 von 0,001 bis 6 g/10 min bei 230°C, 2,16 kg; und ein zweites Polyalphaolefin.

6. Beutel nach Anspruch 5, wobei
der Gehalt des dritten thermoplastischen Elastomers in der weiteren Schicht 40 bis 90 Gew%, bevorzugt 55 bis 75 Gew%, beträgt;
und/oder
der Gehalt des Polyalphaolefins in der weiteren Schicht 10 bis 60 Gew%, bevorzugt 25 bis 45 Gew% beträgt.

7. Beutel nach Anspruch 5 oder 6, wobei
das dritte thermoplastische Elastomer ausgewählt ist aus: Styrol-Blockcopolymeren, hydrogenierten Styrol-Blockcopolymeren, Styrol-Isopren-Styrol-Copolymer, Styrol-Ethylen-Butylen-Styrol-Copolymer, Styrol-Ethylen-Propylen-Copolymer, Styrol-Ethylen-Propylen-Styrol-Copolymer, und Styrol-Ethylen-Ethylen-Propylen-Styrol-Copolymer;
und/oder
das zweite Polyalphaolefin ausgewählt ist aus Polypropylen, Polypropylen-Copolymer, Polypropylen-Random-Copolymer, und Polypropylen-Homopolymer, und/oder ein Ethylen-Comonomer umfasst.

8. Beutel nach einem der Ansprüche 5 bis 7, wobei das dritte thermoplastische Elastomer ein Styrol-Ethylen-Butylen-Styrol-Copolymer umfasst, und/oder das zweite Polyalphaolefin ein Polypropylen-Random-Copolymer oder ein Polypropylen-Random-Copolymer mit Ethylen als Comonomer umfasst.

9. Beutel nach einem der Ansprüche 5 bis 8, wobei die Mehrschichtfolie zwei Außenschichten umfasst und die weitere Schicht zwischen den zwei Außenschichten angeordnet ist.

10. Beutel nach einem der vorstehenden Ansprüche, wobei die eine oder zwei Außenschichten eine Dicke von 5 bis 20 µm besitzt; und/oder
wobei die weitere Schicht eine Dicke von 50 bis 500 µm besitzt; und/oder
wobei die Mehrschichtfolie mindestens ein Element aufweist, ausgewählt aus: eine Reißdehnung in Längsrichtung einer Extrusion der Mehrschichtfolie von 300 % bis 750 %; eine Reißdehnung in Querrichtung der Extrusion der Mehrschichtfolie von 300 % bis 750 %; eine Reißfestigkeit in Längsrichtung der Extrusion der Mehrschichtfolie von 20 N/mm² bis 50 N/mm², und eine Reißfestigkeit in Querrichtung der Extrusion der Mehrschichtfolie von 10 N/mm² bis 40 N/mm².

11. Beutel nach einem der vorstehenden Ansprüche, wobei die eine oder zwei Außenschichten und/oder die weitere Schicht Additive in einem Gehalt unter 5000 ppm oder unter 200 ppm aufweisen.

12. Beutel nach einem der Ansprüche 5 bis 11 , wobei die Dicke der weiteren Schicht der Mehrschichtfolie in einem Bereich von 100 bis 500 µm liegt.

13. Verwendung des Beutels nach einem der Ansprüche l bis 12 in der Hämodialyse oder Peritonealdialyse oder einer Hämodialyse- oder Peritonealdialysevorrichtung, insbesondere als Behälter für eine Dialysierflüssigkeit in einer Hämodialyse- oder Peritonealdialysevorrichtung.

14. Verfahren zur Herstellung eines Beutels, umfassend eine Mehrschichtfolie nach einem der vorstehenden Ansprüche, wobei die Mehrschichtfolie durch Coextrusion hergestellt wird.

## Claims

1. A medical bag comprising a multilayer film having one or two outer layers, the outer layers including:
a first polyalphaolefin;
a first thermoplastic elastomer having a melt viscosity of a melt flow index according to ISO 1133 of 0.001 to 6 g/ 10 min at 230°C, 2.16 kg; and
a second thermoplastic elastomer having a melt viscosity which is not measurable according to ISO 1133, which is higher than the melt viscosity of the first thermoplastic elastomer.

2. The bag according to claim 1, wherein:
the content of the first thermoplastic elastomer in the outer layer is from 20 to 50% by weight, preferably from 25 to 35% by weight, and/or
the content of the second thermoplastic elastomer in the outer layer is from 2 to 20% by weight, preferably from 5 to 15% by weight.

3. The bag according to any one of the preceding claims,
wherein
the first polyalphaolefin is selected from: polypropylene, polypropylene copolymer, polypropylene random copolymer, heterophasic polypropylene random copolymer;
and/or
the first and/or second thermoplastic elastomer is selected from: styrene block copolymers, hydrogenated styrene block copolymers, styrene-butadiene-styrene copolymer, styrene-isoprene-styrene copolymer, styrene-ethylene-butylene-styrene copolymer, styrene-ethylene-propylene copolymer, styrene-ethylene-propylene-styrene copolymer, styrene-ethylene-ethylene-propylene-styrene copolymer and styrene-ethylene-butylene copolymer.

4. The bag according to any one of the preceding claims,
wherein
the first polyalphaolefin comprises a heterophasic polypropylene random copolymer; and/or
the first thermoplastic elastomer comprises a styrene-ethylene-butylene-styrene copolymer; and/or
the second thermoplastic elastomer is selected from:
styrene-ethylene-propylene-styrene copolymer, styrene-ethylene-ethylene-propylene-styrene copolymer.

5. The bag according to any one of the preceding claims comprising:
a further layer, the further layer including:
a third thermoplastic elastomer having a melt viscosity of a melt flow index according to ISO 1133 of 0.001 to 6 g/ 10 min at 230°C, 2.16 kg; and
a second polyalphaolefin.

6. The bag according to claim 5, wherein
the content of the third thermoplastic elastomer in the further layer is 40 to 90% by weight, preferably 55 to 75% by weight;
and/or
the content of the polyalphaolefin in the further layer is 10 to 60% by weight, preferably 25 to 45% by weight.

7. The bag according to claim 5, wherein
the third thermoplastic elastomer is selected from:
styrene block copolymers, hydrogenated styrene block copolymers, styrene-isoprene-styrene copolymer, styrene-ethylene-butylene-styrene copolymer, styrene-ethylene-propylene copolymer, styrene-ethylene-propylene-styrene copolymer, and styrene-ethylene-ethylene-propylene-styrene copolymer;
and/or
the second polyalphaolefin is selected from polypropylene, polypropylene copolymer, polypropylene random copolymer, and polypropylene homopolymer, and/or comprises an ethylene comonomer.

8. The bag according to any one of claims 5 to 7, wherein the third thermoplastic elastomer comprises a styrene-ethylene-butylene-styrene copolymer, and/or the second polyalphaolefin is a polypropylene random copolymer or a polypropylene random copolymer with ethylene as comonomer.

9. The bag according to any one of claims 5 to 8, wherein the multilayer film comprises two outer layers and the further layer is arranged between the two outer layers.

10. The bag according to any one of the preceding claims,
wherein the one or two outer layers have a thickness of 5 to 20 µm; and/or
wherein the further layer has a thickness of 50 to 500 µm; and/or
wherein the multilayer film has at least one element selected from: a tensile elongation in the longitudinal direction of an extrusion of the multilayer film of 300% to 750%; a tensile elongation in the transverse direction of the extrusion of the multilayer film of 300% to 750%; a tensile strength in the longitudinal direction of the extrusion of the multilayer film of 20 N/mm² to 50 N/mm², and a tensile strength in the transverse direction of the extrusion of the multilayer film of 10 N/mm² to 40 N/mm².

11. The bag according to any one of the preceding claims,
wherein the one or two outer layers and/or the further layer have additives in a content below 5000 ppm or below 200 ppm.

12. The bag according to any one of claims 5 to 11, wherein the thickness of the further layer of the multilayer film is in a range of 100 to 500 µm.

13. Use of the bag according to any one of claims 1 to 12 in hemodialysis or peritoneal dialysis or a hemodialysis or peritoneal dialysis device, in particular as a container for a dialysis fluid in a hemodialysis or peritoneal dialysis device.

14. A process for producing a bag comprising a multilayer film as claimed in any one of the preceding claims, wherein the multilayer film is produced by coextrusion.

## Revendications

1. Sac à des fins médicales, comprenant un film multicouches avec une ou deux couches externes, dans lequel les couches externes contiennent :
une première polyalphaoléfine ;
un premier élastomère thermoplastique avec une viscosité de fusion d'un indice de fluage selon ISO 1133 de 0,001 à 6 g/10 min à 230°C, 2,16 kg ; et
un deuxième élastomère thermoplastique avec une viscosité de fusion élevée non mesurable selon ISO 1133 qui est supérieure à la viscosité de fusion du premier élastomère thermoplastique.

2. Sac selon la revendication 1, dans lequel
la teneur du premier élastomère thermoplastique dans la couche externe se monte à 20 à 50 % en poids, de préférence 25 à 35 % en poids, et/ou
la teneur du deuxième élastomère thermoplastique dans la couche externe se monte à 2 à 20 % en poids, de préférence 5 à 15 % en poids.

3. Sac selon une des revendications précédentes, dans lequel
la première polyalphaoléfine est sélectionnée parmi :
polypropylène, copolymère de polypropylène, copolymère statistique de polypropylène, copolymère statistique de polypropylène hétérophasique ;
et/ou
le premier et/ou le deuxième élastomère thermoplastique est sélectionné parmi : copolymères séquencés de styrène, copolymères séquencés de styrène hydrogénés, copolymère de styrène-butadiène-styrène, copolymère de styrène-isoprène-styrène, copolymère de styrène-éthylène-butylène-styrène, copolymère de styrène-éthylène-propylène, copolymère de styrène-éthylène-propylène-styrène, copolymère de styrène-éthylène-éthylène-propylène-styrène et copolymère de styrène-éthylène-butylène.

4. Sac selon une des revendications précédentes, dans lequel
la première polyalphaoléfine comprend un copolymère statistique de polypropylène hétérophasique ; et/ou
le premier élastomère thermoplastique comprend un copolymère de styrène-éthylène-butylène-styrène ;
et/ou
le deuxième élastomère thermoplastique est sélectionné parmi : copolymère de styrène-éthylène-propylène-styrène, copolymère de styrène-éthylène-éthylène-propylène-styrène.

5. Sac selon une des revendications précédentes, comprenant :
une autre couche, dans lequel l'autre couche continent :
un troisième élastomère thermoplastique avec une viscosité de fusion d'un indice de fluage selon ISO 1133 de 0,001 à 6 g/10 min à 230°C, 2,16 kg ; et
une seconde polyalphaoléfine.

6. Sac selon la revendication 5, dans lequel
la teneur du troisième élastomère thermoplastique dans l'autre couche se monte à 40 à 90 % en poids, de préférence 55 à 75 % en poids ;
et/ou
la teneur de la polyalphaoléfine dans l'autre couche se monte à 10 à 60 % en poids, de préférence 25 à 45 % en poids.

7. Sac selon la revendication 5 ou 6, dans lequel
le troisième élastomère thermoplastique est sélectionné parmi : copolymères séquencés de styrène, copolymères séquencés de styrène hydrogénés, copolymère de styrène-isoprène-styrène, copolymère de styrène-éthylène-butylène-styrène, copolymère de styrène-éthylène-propylène, copolymère de styrène-éthylène-propylène-styrène et copolymère de styrène-éthylène-éthylène-propylène-styrène ;
et/ou
la seconde polyalphaoléfine est sélectionnée parmi polypropylène, copolymère de polypropylène, copolymère statistique de polypropylène et homopolymère de polypropylène, et/ou comprend un comonomère d'éthylène.

8. Sac selon une des revendications 5 à 7, dans lequel le troisième élastomère thermoplastique comprend un copolymère de styrène-éthylène-butylène-styrène, et/ou la seconde polyalphaoléfine comprend un copolymère statistique de polypropylène ou un copolymère statistique de polypropylène avec de l'éthylène comme comonomère.

9. Sac selon une des revendications 5 à 8, dans lequel le film multicouches comprend deux couches externes et l'autre couche est disposée entre les deux couches externes.

10. Sac selon une des revendications précédentes, dans lequel la ou les deux couches externes possède une épaisseur de 5 à 20 µm ; et/ou
dans lequel l'autre couche possède une épaisseur de 50 à 500 µm ; et/ou
dans lequel le film multicouches présente au moins un élément sélectionné parmi : une élongation à la rupture dans la direction longitudinale d'une extrusion du film multicouches de 300 % à 750 % ; une élongation à la rupture dans la direction transversale de l'extrusion du film multicouches de 300 % à 750 % ; une résistance à la traction dans la direction longitudinale de l'extrusion du film multicouches de 20 N/mm² à 50 N/mm², et une résistance à la traction dans la direction transversale de l'extrusion du film multicouches de 10 N/mm² à 40 N/mm².

11. Sac selon une des revendications précédentes, dans lequel la ou les deux couches externes et/ou l'autre couche présentent des additifs dans une teneur en dessous de 5000 ppm ou en dessous de 200 ppm.

12. Sac selon une des revendications 5 à 11, dans lequel l'épaisseur de l'autre couche du film multicouches se situe dans une région de 100 à 500 µm.

13. Utilisation du sac selon une des revendications 1 à 12 dans l'hémodialyse ou la dialyse péritonéale ou un dispositif d'hémodialyse ou de dialyse péritonéale, notamment en tant que récipient pour un fluide de dialyse dans un dispositif d'hémodialyse ou de dialyse péritonéale.

14. Procédé de fabrication d'un sac, comprenant un film multicouches selon une des revendications précédentes, dans lequel le film multicouches est fabriqué par co-extrusion.
